# FASCICULE DE BREVET EUROPEEN

(11) **EP 1 554 653 B1**
(45) Date de publication et mention de la délivrance du brevet: **24.08.2011**
(21) Numéro de dépôt: 02790514.0
(22) Date de dépôt: 15.10.2002
(51) Int. Cl.: G06F 11/34, G06F 11/36

(54) **TRANSMISSION DE MESSAGES NUMERIQUES DE REPETITION ENTRE UN CIRCUIT DE SURVEILLANCE DE MICROPROCESSEUR ET UN OUTIL D'ANALYSE**
ÜBERTRAGUNG VON WIEDERHOLUNGSDIGITALNACHRICHTEN ZWISCHEN EINER ÜBERWACHUNGSSCHALTUNG EINES MIKROPROZESSORS UND EINES ANALYSEWERKZEUGS
REPEAT DIGITAL MESSAGE TRANSMISSION BETWEEN A MICROPROCESSOR MONITORING CIRCUIT AND AN ANALYZING TOOL

(43) Date de publication de la demande: 20.07.2005
(73) Titulaire: STMicroelectronics S.A., 92120 Montrouge (FR)
(72) Inventeur: REGNIER, Laurent, F-38610 Gières (FR)
(74) Mandataire: de Beaumont, Michel
(86) Numéro de dépôt international: PCT/FR2002/003526
(87) Numéro de publication internationale: WO 2004/036428

(56) Documents cités:
- WO-A-00/77643
- WO-A-93/00632
- US-A- 5 237 684
- NEXUS 5001 FORUM: "Standard for a Global Embedded Processor Debug Interface" 15 décembre 1999 (1999-12-15) , IEEE-ISTO XP002247195 cité dans la demande tableaux 6-7,6-8,6-12,6-13,6-14,6-15

## Description

La présente invention concerne le test de microprocesseurs. Elle concerne plus particulièrement un procédé et un dispositif de transmission de données numériques entre un circuit de surveillance intégré dans une puce de microprocesseur et un outil d'analyse.

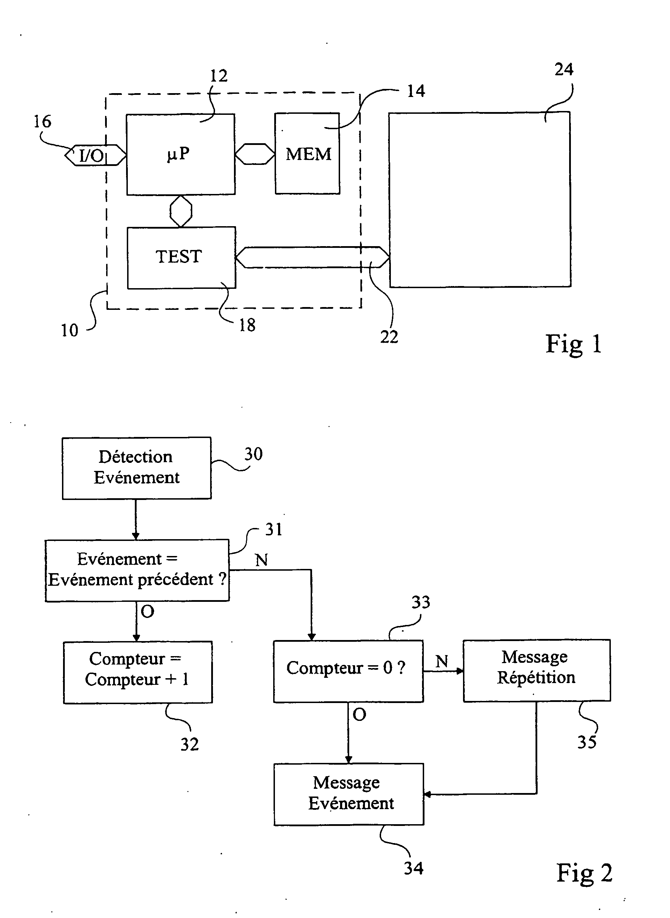

La figure 1 représente de façon schématique un circuit intégré 10 comportant un microprocesseur (µP) 12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18. Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et est relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

WO 93/00632 décrit un procédé de transmission de messages numériques par des bornes de sortie d'une unité de surveillance intégré a un microprocesseur. WO 93/00632 propose de retenir la transmission des messages répétés et de ne transmettre que chaque n-ième message, ce qui réduit le nombre de messages transmis, mais qui entraîne une perte d'information sur le nombre de répétitions.

WO 00/77643 décrit un programme d'ordinateur qui suit des caractéristiques de fonctionnement d'un autre programme a évaluer. Comme cela il est représenté en figure 1, des événements en relation avec le programme 110 a évaluer sont suivis par un générateur de profil 102, qui comprend trois blocs, un bloc de collection des données 104, un bloc d'analyse 106, et un bloc de sortie 108. Comme cela est décrit en page 6, lignes 2 à 5, les données collectées par le bloc 104 sont transférées vers le bloc d'analyse 106 pour la création d'une structure de données spécialisée appelée "path map". Le "path map" comprend des "path element control blocks" (PECB). La figure 9 montre les étapes de construction d'un PECB et un compte indiquant le nombre de fois que l'évènement est exécuté est sauvegardé dans chaque PECB.

La norme IEEE-ISTO-5001 en préparation propose dans sa version de 1999, accessible par exemple sur le site www.ieee-isto.org/Nexus5001, un protocole particulier d'échanges de messages entre un circuit de surveillance et un outil d'analyse pour un circuit de surveillance 18 ne nécessitant qu'un nombre réduit de bornes de test 22.

Parmi les messages fournis par le circuit de surveillance 18 selon la norme IEEE-ISTO-5001, un message indique l'occurrence d'un saut lors du déroulement du programme exécuté par le microprocesseur 12. Un saut correspond au passage d'une instruction initiale du programme à une instruction de destination autre que l'instruction qui suit l'instruction initiale dans la suite d'instructions formant le programme. A partir des messages de saut transmis par le circuit de surveillance 18, l'outil d'analyse 24 reconstitue la séquence d'instructions exécutée par le microprocesseur 12. La séquence d'instructions reconstituée peut alors être comparée à une séquence d'instructions théoriquement exécutée par le microprocesseur 12 de façon à déterminer des dysfonctionnements du microprocesseur 12.

La norme IEEE-ISTO-5001 définit un message de saut constitué d'un en-tête identifiant le type de saut parmi différents types de sauts détectables par le circuit de surveillance et d'un nombre entier indiquant le nombre d'instructions exécutées par le microprocesseur depuis la dernière transmission d'un message de saut et si nécessaire d'une donnée représentative de l'adresse de l'instruction de destination.

Un programme exécuté par un microprocesseur comporte généralement des boucles, une boucle correspondant à la répétition, un certain nombre de fois, d'une suite d'instructions, un saut étant effectué depuis la dernière instruction de la boucle vers la première instruction de la boucle. Dans des applications particulières, notamment en téléphonie, le programme peut comporter un nombre important de boucles de petite taille. A titre d'exemple, la recopie du contenu d'une mémoire peut être réalisée par une boucle ne contenant qu'une seule instruction et qui peut être mise en oeuvre, selon les technologies utilisées, par un ou deux cycles d'horloge de fonctionnement du microprocesseur.

Les microprocesseurs actuels fonctionnent couramment à des fréquences d'horloge atteignant 400 MHz. Toutefois, selon les technologies utilisées, la fréquence maximale de transmission de messages par le circuit de surveillance 18 sur les bornes de test 22 est généralement limitée à une centaine de mégahertz. Lors de l'exécution d'une boucle de petite taille, la fréquence à laquelle des messages représentatifs des sauts de la boucle devraient être transmis par le circuit de surveillance 18 sur les bornes de test 22 peut dépasser la fréquence maximale de transmission. Il en résulte une saturation du circuit de surveillance qui ne peut plus fournir des messages de façon correcte.

De plus, selon la norme IEEE-ISTO-5001, le circuit de surveillance 18 peut fournir un message chaque fois que le microprocesseur 12 exécute une instruction de lecture d'une donnée stockée dans la mémoire 14 ou une instruction d'écriture d'une donnée dans la mémoire 14. Par conséquent, lorsqu'une boucle de petite taille comporte une instruction de lecture ou d'écriture, le circuit de surveillance 18 doit transmettre sur les bornes de test 22, en plus des messages représentatifs des sauts de la boucle, des messages représentatifs des opérations de lecture ou d'écriture, ce qui peut aggraver les risques de saturation du circuit de surveillance 18.

La présente invention vise un procédé et un circuit de transmission de messages numériques, par des bornes de sortie d'un circuit de surveillance intégré à un microprocesseur, indiquant l'occurrence d'évènements spécifiques lors de l'exécution du programme par le microprocesseur et ne présentant pas l'inconvénient précédemment mentionné.

Pour atteindre cet objet, la présente invention prévoit un procédé de transmission de messages numériques par des bornes de sortie d'un circuit de surveillance intégré à un microprocesseur lors de l'exécution d'une suite d'instructions par le microprocesseur, chaque message numérique étant représentatif de données caractéristiques mémorisées par le circuit de surveillance lors de la détection d'un évènement spécifique parmi plusieurs évènements spécifiques dans l'exécution de la suite d'instructions, une desdites données correspondant à un identifiant dudit évènement spécifique, comportant les étapes consistant à comparer les données caractéristiques mémorisées des deux derniers évènements spécifiques détectés correspondant à un même identifiant ; si les données comparées sont identiques, incrémenter un compteur de répétition associé audit évènement spécifique ; si les données comparées sont différentes, transmettre un message numérique représentatif des données caractéristiques du dernier évènement spécifique détecté, et, en outre, si le contenu du compteur de répétition associé audit évènement spécifique est différent de zéro, transmettre un message numérique indiquant une répétition de l'évènement spécifique; et émettre un message numérique indiquant une répétition de l'évènement spécifique si le contenu du compteur de répétition associé audit évènement spécifique est supérieur à un seuil déterminé ; et mettre le compteur de répétition associé audit évènement spécifique à zéro.

Selon un mode de réalisation de la présente invention, le message numérique indiquant une répétition de l'évènement spécifique comprend le contenu du compteur de répétition associé audit évènement spécifique.

Selon un mode de réalisation de la présente invention, le procédé comprend en outre l'étape de remettre le compteur de répétition associé audit évènement spécifique à zéro après l'émission d'un message numérique indiquant une répétition de l'évènement spécifique.

Selon un mode de réalisation de la présente invention, les données caractéristiques comprennent le nombre d'instructions exécutées par le microprocesseur entre les deux derniers évènements spécifiques détectés.

Selon un mode de réalisation de la présente invention, l'évènement spécifique est un saut dans la suite d'instructions exécutées par le microprocesseur.

Selon un mode de réalisation de la présente invention, les données caractéristiques mémorisées comprennent une donnée représentative de l'adresse de l'instruction de destination du dernier saut détecté.

Selon un mode de réalisation de la présente invention, l'évènement spécifique est une instruction de lecture ou d'écriture dans la suite d'instructions exécutées par le microprocesseur.

La présente invention prévoit également un dispositif de transmission de messages numériques entre un circuit de surveillance intégré à un microprocesseur et un outil d'analyse, lors de l'exécution d'une suite d'instructions par le microprocesseur, comportant un moyen de détection d'un évènement spécifique parmi plusieurs évènements spécifiques dans l'exécution de la suite d'instructions ; un moyen de mémorisation de données caractéristiques de l'évènement spécifique détecté, une desdites données caractéristiques correspondant à un identifiant de l'évènement spécifique ; et un moyen de transmission d'un message numérique représentatif des données caractéristiques mémorisées, comprenant un moyen de comparaison des données caractéristiques mémorisées des deux derniers évènements spécifiques détectés correspondant à un même identifiant ; un moyen d'incrémentation d'un compteur de répétition associé audit évènement spécifique lorsque le moyen de comparaison fournit un signal indiquant que les données comparées sont identiques, le moyen de transmission étant adapté à transmettre un message représentatif des données caractéristiques du dernier évènement spécifique détecté lorsque le moyen de comparaison fournit un signal indiquant que les données comparées sont différentes, et, en outre, à transmettre un message numérique indiquant une répétition de l'évènement spécifique lorsque le moyen d'incrémentation fournit un signal indiquant que le contenu du compteur de répétition associé audit évènement spécifique est différent de zéro et en outre à émettre un message numérique indiquant une répétition de l'évènement spécifique si le contenu du compteur de répétition associé audit évènement spécifique est supérieur à un seuil déterminé et mettre le compteur de répétition associé audit évènement spécifique à zéro.

Selon un mode de réalisation de la présente invention, le moyen d'incrémentation est en outre adapté à mettre le compteur de répétition associé audit évènement spécifique à zéro lorsque le moyen de transmission transmet un message numérique indiquant une répétition de l'évènement spécifique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente, de façon très schématique, l'architecture d'une puce intégrant un microprocesseur et un circuit de surveillance ; et
la figure 2 représente sous la forme d'un schéma par blocs un exemple de réalisation du procédé de transmission de messages numériques par le circuit de surveillance selon l'invention.

La présente invention concerne la transmission de messages numériques entre un circuit de surveillance intégré à la puce d'un microprocesseur et un outil d'analyse, par exemple selon une architecture analogue à celle de la figure 1. Le circuit de surveillance 18 est adapté à transmettre à l'outil d'analyse 24 différents messages lorsque des évènements particuliers se produisent lors de l'exécution d'un programme par le microprocesseur 12. Le codage du message numérique peut correspondre au codage décrit dans la norme IEEE-ISTO-5001.-Par exemple, le circuit de surveillance 18 transmet à l'outil d'analyse 24 un message indiquant la détection d'un saut dans l'exécution du programme par le microprocesseur 12. Un saut peut être imposé par une instruction spécifique du programme ou bien être provoqué par des éléments de circuit du microprocesseur 12. Une répétition d'une même séquence d'instructions du programme un certain nombre de fois est par exemple obtenue par un saut imposé par des éléments de circuit du microprocesseur 12. Un saut peut être par exemple systématiquement provoqué lorsque le microprocesseur 12 reçoit un signal d'alerte indiquant un faible niveau de charge de la batterie d'alimentation du circuit intégré 10. Le circuit de surveillance 18 transmet également à l'outil un message indiquant la détection d'une opération de lecture ou d'écriture lors de l'exécution du programme par le microprocesseur 12. De façon à déterminer le nombre de répétitions d'un même message qui devrait être fourni par le circuit de surveillance 18 plusieurs fois de suite, le circuit de surveillance 18 comprend un compteur de répétition initialement fixé à 0 et associé à un message particulier.

La figure 2 décrit sous forme d'un schéma par blocs un exemple de réalisation du procédé de transmission de messages numériques entre le circuit de surveillance 18 et l'outil d'analyse 24.

Le procédé de transmission de messages numériques selon l'invention consiste, lorsque le même message devrait être transmis par le circuit de surveillance 18 plusieurs fois de suite lors de l'exécution du programme par le microprocesseur 12, à transmettre le message une seule fois et à transmettre un message indiquant le nombre de répétitions du message.

A l'étape 30, le circuit de surveillance 18 a détecté un évènement particulier lors de l'exécution du programme stocké dans la mémoire 14 par le microprocesseur 12 qui normalement conduit à la transmission d'un message par le circuit de surveillance 18 vers l'outil d'analyse 24. Le circuit de surveillance 18 mémorise alors des données spécifiques caractéristiques de l'évènement détecté. En particulier, dans le cas où l'évènement détecté est un saut, une donnée mémorisée correspond à un identifiant du type de saut détecté. Une autre donnée mémorisée correspond au nombre d'instructions exécutées par le microprocesseur 12 entre le saut détecté et le saut précédemment détecté. Une autre donnée mémorisée peut correspondre à l'adresse de destination du saut. La mémorisation d'une telle donnée peut être nécessaire à l'outil d'analyse 24, lorsque le saut résulte d'une instruction de saut qui commande un saut vers une instruction du programme située à une adresse définie par une variable pouvant prendre différentes valeurs. Dans le cas où l'évènement détecté est une opération de lecture ou d'écriture, une donnée mémorisée correspond à un identifiant indiquant s'il s'agit d'une opération de lecture ou d'écriture. Une autre donnée mémorisée correspond à la valeur de la donnée mémorisée ou lue. Une autre donnée mémorisée peut être représentative de l'adresse d'une zone de la mémoire 14 où la donnée est stockée ou lue. Le procédé continue alors à l'étape 31.

A l'étape 31, le circuit de surveillance 18 compare les données mémorisées caractéristiques de l'évènement détecté à l'étape 30 avec les données mémorisées associées au dernier évènement détecté correspondant au même identifiant. La comparaison est effectuée pour des données de même nature. A titre d'exemple, lorsque l'évènement est un saut, la comparaison est réalisée par exemple à la fois sur le nombre d'instructions réalisées depuis le saut précédemment détecté, le cas échéant l'adresse de destination, etc. Lorsque l'évènement est une opération de lecture, la comparaison est réalisée par exemple à la fois sur la valeur de la donnée lue et l'adresse de la zone mémoire où la donnée est lue. Si les deux derniers évènements détectés par le circuit de surveillance ayant un même identifiant sont identiques, le procédé continue à l'étape 32.

A l'étape 32, le circuit de surveillance 18 incrémente le compteur de répétition associé à l'évènement détecté à l'étape 30. Aucun message n'est alors transmis à l'outil d'analyse 24.

Si, à l'étape 31, les deux derniers évènements détectés correspondant à un même identifiant ne sont pas identiques, le procédé continue à l'étape 33.

A l'étape 33, le circuit de surveillance 18 vérifie si le contenu du compteur de répétition associé à l'évènement détecté à l'étape 30 est égal à 0. Dans l'affirmative, le procédé continue à l'étape 34.

A l'étape 34, le circuit de surveillance 18 transmet à l'outil d'analyse 24 par l'intermédiaire des bornes de test 22 un message représentatif de l'évènement détecté à l'étape 30. Dans le cas où l'évènement détecté est un saut, le message peut consister en la concaténation des données caractéristiques mémorisées et comprendre un en-tête identifiant la nature du saut, le nombre d'instructions réalisées depuis la précédente détection de saut, éventuellement l'adresse de l'instruction de destination du saut, etc.

Si, à l'étape 33, le contenu du compteur de répétition associé à l'évènement détecté à l'étape 30 est différent de 0, le procédé continue à l'étape 35.

A l'étape 35, le circuit de surveillance 18 transmet à l'outil d'analyse 24 par l'intermédiaire des bornes de test 22 un message de répétition qui peut être constitué, par exemple, d'un en-tête indiquant qu'il s'agit d'un message de répétition et du contenu du compteur de répétition associé à l'évènement détecté à l'étape 30. Le compteur de répétition est alors remis à 0 et le procédé continue à l'étape 34 à laquelle le circuit de surveillance 18 fournit à l'outil d'analyse 24 un message représentatif de l'évènement détecté à l'étape 30.

La présente invention permet de réduire le nombre de messages numériques transmis par le circuit de surveillance 18 à l'outil d'analyse 24 lorsque plusieurs évènements qui entraîneraient la transmission par le circuit de surveillance de messages identiques sont successivement détectés par le circuit de surveillance 18. Par exemple, la présente invention permet donc, dans le cas de boucles de petites tailles où la fréquence des sauts peut devenir importante, de maintenir la fréquence de transmission de messages numériques sur les bornes de test 22 inférieure à la fréquence maximale de transmission autorisée.

Selon une variante de l'invention, lorsqu'à l'étape 33, le compteur de répétition associé à un évènement particulier atteint une valeur de seuil, le circuit de surveillance 18 transmet un message comportant notamment la valeur de seuil du compteur de répétition puis un message représentatif de l'évènement particulier et remet le compteur de répétition de boucle à 0. Ceci permet d'éviter, par exemple dans le cas où une boucle est répétée un nombre important de fois, qu'aucun message ne soit transmis à l'outil d'analyse 24 pendant une durée trop importante.

Bien entendu, la présente invention est susceptible de diverses variantes et modifications qui apparaîtront à l'homme de l'art. Par exemple, un message de répétition peut être utilisé uniquement pour certains évènements spécifiques, un message étant systématiquement fourni à l'outil d'analyse par le circuit de surveillance pour les autres évènements.

## Revendications

1. Procédé de transmission de messages numériques par des bornes de sortie (22) d'un circuit de surveillance (18) intégré à un microprocesseur (12) lors de l'exécution d'une suite d'instructions par le microprocesseur, chaque message numérique étant représentatif de données caractéristiques mémorisées par le circuit de surveillance lors de la détection d'un évènement spécifique parmi plusieurs évènements spécifiques dans l'exécution de la suite d'instructions, une desdites données correspondant à un identifiant dudit évènement spécifique, **caractérisé en ce qu'**il comporte les étapes suivantes :
comparer les données caractéristiques mémorisées des deux derniers évènements spécifiques détectés correspondant à un même identifiant ;
si les données comparées sont identiques, incrémenter un compteur de répétition associé audit évènement spécifique ;
si les données comparées sont différentes, transmettre un message numérique représentatif des données caractéristiques du dernier évènement spécifique détecté, et, en outre, si le contenu du compteur de répétition associé audit évènement spécifique est différent de zéro, transmettre un message numérique indiquant une répétition dudit évènement spécifique; et
émettre un message numérique indiquant une répétition dudit évènement spécifique si le contenu du compteur de répétition associé audit évènement spécifique est supérieur à un seuil déterminé et mettre le compteur de répétition associé audit évènement spécifique à zéro.

2. Procédé selon la revendication 1, dans lequel le message numérique indiquant une répétition dudit évènement spécifique comprend le contenu du compteur de répétition associé audit évènement spécifique.

3. Procédé selon la revendication 1, comprenant en outre l'étape de remettre le compteur de répétition associé audit évènement spécifique à zéro après l'émission d'un message numérique indiquant une répétition dudit évènement spécifique.

4. Procédé selon la revendication 1, dans lequel les données caractéristiques comprennent le nombre d'instructions exécutées par le microprocesseur (12) entre les deux derniers évènements spécifiques détectés.

5. Procédé selon la revendication 1, dans lequel l'évènement spécifique est un saut dans la suite d'instructions exécutées par le microprocesseur (12).

6. Procédé selon la revendication 5, dans lequel les données caractéristiques mémorisées lors de la détection d'un saut comprennent une donnée représentative de l'adresse de l'instruction de destination du dernier saut détecté.

7. Procédé selon la revendication 1, dans lequel l'évènement spécifique est une instruction de lecture ou d'écriture dans la suite d'instructions exécutées par le microprocesseur (12).

8. Dispositif de transmission de messages numériques entre un circuit de surveillance (18) intégré à un microprocesseur (12) et un outil d'analyse (24), lors de l'exécution d'une suite d'instructions par le microprocesseur, comportant :
un moyen de détection d'un évènement spécifique parmi plusieurs évènements spécifiques dans l'exécution de la suite d'instructions ;
un moyen de mémorisation de données caractéristiques de l'évènement spécifique détecté, une desdites données caractéristiques correspondant à un identifiant de l'évènement spécifique ; et
un moyen de transmission d'un message numérique représentatif des données caractéristiques mémorisées,
**caractérisé en ce qu'**il comprend :
un moyen de comparaison des données caractéristiques mémorisées des deux derniers évènements spécifiques détectés correspondant à un même identifiant ;
un moyen d'incrémentation d'un compteur de répétition associé audit évènement spécifique lorsque le moyen de comparaison fournit un signal indiquant que les données comparées sont identiques,
et **en ce que** le moyen de transmission est adapté à transmettre un message représentatif des données caractéristiques du dernier évènement spécifique détecté lorsque le moyen de comparaison fournit un signal indiquant que les données comparées sont différentes, et, en outre, à transmettre un message numérique indiquant une répétition dudit évènement spécifique lorsque le moyen d'incrémentation fournit un signal indiquant que le contenu du compteur de répétition associé audit évènement spécifique est différent de zéro, et **en ce que** le moyen de transmission est adapté à émettre un message numérique indiquant une répétition dudit évènement spécifique si le contenu du compteur de répétition associé audit évènement spécifique est supérieur à un seuil déterminé et mettre le compteur de répétition associé audit évènement spécifique à zéro.

9. Dispositif selon la revendication 8, dans lequel le moyen d'incrémentation est en outre adapté à mettre le compteur de répétition associé audit évènement spécifique à zéro lorsque le moyen de transmission transmet un message numérique indiquant une répétition dudit évènement spécifique.

## Claims

1. A method for transmitting digital messages through output terminals (22) of a monitoring circuit (18) integrated to a microprocessor (12) on execution of an instruction sequence by the microprocessor, each digital message being representative of characteristic data stored by the monitoring circuit on detection of a specific event from among several specific events in the execution of the instruction sequence, one of said data corresponding to an identifier of said specific event, **characterized in that** it comprises the steps of:
comparing the characteristic stored data of the last two detected specific events corresponding to a same identifier;
if the compared data are identical, incrementing a repetition counter associated with said specific event;
if the compared data are different, transmitting a digital message representative of the data characteristic of the last detected specific event and, further, if the content of the repetition counter associated with said specific event is different from zero, transmitting a digital message indicating a repetition of the specific event; and
transmitting a digital message indicating a repetition of the specific event if the content of the repetition counter associated with said specific event is greater than a determined threshold and setting the repetition counter associated with said specific event to zero.

2. The method of claim 1, in which the digital message indicating a repetition of the specific event comprises the content of the repetition counter associated with said specific event.

3. The method of claim 1, further comprising the step of resetting the repetition counter associated with said specific event after transmission of a digital message indicating a repetition of the specific event.

4. The method of claim 1, in which the characteristic data comprise the number of instructions executed by the microprocessor (12) between the last two detected specific events.

5. The method of claim 1, in which the specific event is a jump in the instruction sequence executed by the microprocessor (12).

6. The method of claim 5, in which the characteristic stored data comprise data representative of the address of the destination instruction of the last detected jump.

7. The method of claim 1, in which the specific event is a read or write instruction in the instruction sequence executed by the microprocessor (12).

8. A device for transmitting digital messages between a monitoring circuit (18) integrated with a microprocessor (12) and an analysis tool (24), on execution of an instruction sequence by the microprocessor, comprising:
means for detecting a specific event from among several specific events in the execution of the instruction sequence;
means for storing data characteristic of the detected specific event, one of said characteristic data corresponding to an identifier of the specific event; and
means for transmitting a digital message representative of the stored characteristic data,
**characterized in that** it comprises:
means for comparing stored characteristic data of the last two detected specific events corresponding to a same identifier;
means for incrementing a repetition counter associated with said specific event when the comparison means provides a signal indicating that the compared data are identical,
and **in that** the transmission means is capable of transmitting a message representative of the data characteristic of the last detected specific event when the comparison means provides a signal indicating that the compared data are different and, further, of transmitting a digital message indicating a repetition of the specific event when the incrementation means provides a signal indicating that the content of the repetition counter associated with said specific event is different from zero, and **in that** the transmission means is capable of transmitting a digital message indicating a repetition of the specific event if the content of the repetition counter associated with said specific event is greater than a determined threshold and setting the repetition counter associated with said specific event to zero.

9. The device of claim 8, in which the incrementation means is further capable of setting the repetition counter associated with said specific event to zero when the transmission means transmits a digital message indicating a repetition of the specific event.

## Patentansprüche

1. Ein Verfahren zum Übertragen von Digitalnachrichten über Ausgangsanschlüsse (22) einer Überwachungsschaltung (18), integriert mit einem Mikroprozessor (12) bei Ausführung einer Befehlsfolge durch den Mikroprozessor, wobei jede Digitalnachricht repräsentativ ist für die charakteristischen Daten, gespeichert in der Überwachungsschaltung bei Feststellung oder Detektion eines speziellen Ereignisses unter mehreren speziellen Ereignissen bei der Ausführung der Befehlsfolge, wobei eine der erwähnten Daten einer Identifizierung des erwähnten speziellen Ereignisses entspricht, **dadurch gekennzeichnet, dass** das Verfahren die folgenden Schritte aufweist:
Vergleichen der charakteristischen gespeicherten Daten der letzten zwei detektierten speziellen Ereignisse entsprechend einer gleichen Identifizierung;
Inkrementieren eines mit den speziellen Ereignissen assoziierten Wiederholungszählers, wenn die verglichenen Daten identisch sind;
Übertragen einer Digitalnachricht repräsentativ für die Datencharakteristik des letzten detektierten speziellen Ereignisses, wenn die verglichenen Daten unterschiedlich sind, und ferner, wenn der Inhalt des Wiederholungszählers assoziiert mit dem speziellen Ereignis sich von Null unterscheidet, Übertragen einer Digitalnachricht, die eine Widerholung des speziellen Ereignisses anzeigt; und
Übertragen einer Digitalnachricht, die eine Wiederholung des speziellen Ereignisses anzeigt, wenn der Inhalt des Wiederholungszählers, assoziiert mit dem speziellen Ereignis, größer ist als eine bestimmte Schwelle und Einstellen des Wiederholungszählers, assoziiert mit dem speziellen Ereignis auf Null.

2. Verfahren nach Anspruch 1, bei dem die eine Wiederholung des speziellen Ereignisses anzeigende Digitalnachricht, den Inhalt des Wiederholungszählers, assoziiert mit dem speziellen Ereignis, aufweist.

3. Verfahren nach Anspruch 1, wobei ferner der Schritt des Rückstellens des Wiederholungszählers, assoziiert mit dem speziellen Ereignis vorgesehen ist, und zwar nach der Übertragung einer Digitalnachricht, die eine Wiederholung des speziellen Ereignisses anzeigt.

4. Verfahren nach Anspruch 1, wobei die charakteristischen Daten die Anzahl der Befehle ausgeführt durch den Mikroprozessor (12) zwischen den letzten zwei detektieren speziellen Ereignissen, umfassen.

5. Verfahren nach Anspruch 1, wobei das spezielle Ereignis ein Sprung in der Instruktionssequenz oder Befehlsfolge, ausgeführt durch den Mikroprozessor (12), ist.

6. Verfahren nach Anspruch 5, wobei die charakteristischen gespeicherten Daten, Daten repräsentativ für die Adresse des Bestimmungsbefehls des letzten detektierten Sprungs, aufweisen.

7. Verfahren nach Anspruch 1, wobei das spezielle Ereignis ein Lese- oder Schreibbefehl in der Befehlsfolge, ausgeführt durch den Mikroprozessor (12) ist.

8. Vorrichtung zur Übertragung von Digitalnachrichten zwischen einer Überwachungsschaltung (18), integriert mit einem Mikroprozessor (12) und einem Analysewerkzeug (24) bei Ausführung einer Instruktionssequenz bzw. Befehlsfolge durch den Mikroprozessor, wobei Folgendes vorgesehen ist:
Mittel zum Detektieren eines speziellen Ereignisses aus mehreren speziellen Ereignissen bei der Ausführung der Befehlsfolge;
Mittel zum Speichern von Daten, charakteristisch für das detektierte spezielle Ereignis, wobei eine der erwähnten charakteristischen Daten einem Identifizierer bzw. Identifizierung des speziellen Ereignisses entspricht; und
Mittel zur Übertragung einer Digitalnachricht, die die gespeicherten charakteristischen Daten repräsentiert, **dadurch gekennzeichnet, dass** sie Folgendes aufweist:
Mittel zum Vergleichen der gespeicherten charakteristischen Daten von den mindestens zwei detektierten speziellen Ereignissen, entsprechend zu einer gleichen Identifizierung;
Mittel zum Inkrementieren eines Wiederholungszählers assoziiert mit dem erwähnten speziellen Ereignis dann, wenn die Vergleichsmittel ein Signal liefern, das anzeigt, dass die verglichenen Daten identisch sind,
und wobei die Sendemittel in der Lage sind eine Nachricht zu übertragen, die repräsentativ ist für die Daten charakteristisch für das letzte detektierte spezielle Ereignis, wenn die Vergleichsmittel ein Signal liefern, welches anzeigt, dass die verglichenen Daten unterschiedlich sind, und wobei diese ferner in der Lage sind eine Digitalnachricht zu übertragen, die eine Wiederholung des speziellen Ereignisses anzeigt dann, wenn die Inkrementierungsmittel ein Signal liefern, das anzeigt, dass der Inhalt des Wiederholungszählers, assoziiert mit dem speziellen Ereignis, sich von Null unterscheidet, und wobei die Übertragungsmittel in der Lage sind, eine Digitalnachricht zu übertragen, die eine Wiederholung des speziellen Ereignisses anzeigt, wenn der Inhalt des Wiederholungszählers, assoziiert mit dem speziellen Ereignis, größer ist als eine bestimmte Schwelle und Einstellen des Wiederholungszählers, assoziiert mit dem speziellen Ereignis, auf Null.

9. Vorrichtung nach Anspruch 8, wobei die Inkrementierungsmittel ferner in der Lage sind, den Wiederholungszähler, assoziiert mit dem speziellen Ereignis, auf Null dann einzustellen, wenn die Übertragungsmittel eine Digitalnachricht übertragen, die eine Wiederholung des speziellen Ereignisses anzeigt.
